# FASCICULE DE BREVET EUROPEEN

(11) **EP 2 523 283 B1**
(45) Date de publication et mention de la délivrance du brevet: **13.11.2013**
(21) Numéro de dépôt: 12290083.0
(22) Date de dépôt: 09.03.2012
(51) Int. Cl.: H02G 3/18

(54) **Support d'appareillage équipé de griffes déployables et rétractables**
Halterung eines Geräts, das mit ausfahrbaren und einziehbaren Greifern ausgestattet ist
Switchgear support provided with extendable and retractable prongs

(30) Priorité: 13.05.2011 FR 1101463
(43) Date de publication de la demande: 14.11.2012
(73) Titulaire: Legrand France, 87000 Limoges (FR); Legrand SNC, 87000 Limoges (FR)
(72) Inventeur: Vergne, Raphaël, 87100 Limoges (FR)
(74) Mandataire: Orsini, Fabienne

(56) Documents cités:
- EP-A2- 1 710 881

## Description

La présente invention concerne de manière générale la fixation d'un support d'appareillage à une boîte électrique.

Elle concerne plus particulièrement un support d'appareillage tel que défini dans le préambule de la revendication 1.

Elle concerne aussi un appareillage électrique comportant un support d'appareillage tel que précité, qui supporte au moins un mécanisme d'appareillage.

### ARRIERE-PLAN TECHNOLOGIQUE

Un support d'appareillage tel que précité est apte à recevoir un mécanisme d'appareillage (prise de courant, interrupteur, ...) dans l'ouverture centrale de son cadre et est apte à se fixer à une boîte murale encastrée dans une paroi.

Il comporte généralement, pour sa fixation à la boîte murale, deux griffes qui interviennent en position diamétralement opposée sur le cadre et qui, sous le contrôle des vis, sont aptes à venir s'ancrer dans la paroi latérale de la boîte murale.

En pratique, pour ancrer les griffes dans la paroi latérale de la boîte murale, l'installateur visse les vis pour faire remonter les écrous le long de leurs corps filetés, ce qui provoque le basculement des griffes depuis leur position escamotée dans laquelle elles sont rétractées pour ne pas interférer avec la boîte murale lors de la mise en place du support d'appareillage sur cette boîte murale, jusqu'à leur position déployée.

Pour faciliter le démontage et l'extraction du support d'appareillage, on connaît du document EP 1 710 881 un support d'appareillage qui est équipé de moyens de rappel élastique des griffes en position escamotée.

Dans ce document, ces moyens de rappel élastique comportent des lames-ressort qui présentent chacune une extrémité de montage fixée au cadre et une extrémité d'actionnement en appui contre la griffe correspondante. Ainsi, lorsque l'installateur visse les vis, le basculement des griffes provoque la déformation élastique des lames-ressort. Lorsque l'installateur dévisse les vis, les lames-ressort sous tension reviennent à leur état de repos et ramènent les griffes en position escamotée.

L'inconvénient de ce support d'appareillage est que, lorsque ses griffes sont déployées pour s'ancrer à la paroi latérale de la boîte murale, elles maintiennent sous tension les lames-ressort dans leur état déformé élastiquement, qui sont dès lors inévitablement sujettes au vieillissement, ce qui réduit leur efficacité dans le temps et ce qui, à terme, peut provoquer leur rupture.

La déformation de ces lames-ressort, lors de l'installation du support d'appareillage sur la boîte murale, génère en outre un effort résistant que l'installateur doit vaincre lorsqu'il visse les vis, au détriment de la facilité d'installation du support d'appareillage.

### OBJET DE L'INVENTION

La présente invention propose alors un nouveau support d'appareillage dont les moyens de rappel des griffes ne sont pas sujets au vieillissement et ne gênent pas l'installation du support d'appareillage sur la boîte murale.

Plus particulièrement, on propose selon l'invention un support d'appareillage tel que défini dans la revendication 1.

Grâce à l'invention, lorsque l'installateur dévisse la vis, l'écrou descend vers l'arrière et appuie sur la partie de montage de l'élément d'escamotage de manière à la plaquer contre le retour du cadre. De cette manière, la partie d'actionnement de l'élément d'escamotage vient agir sur la griffe pour la ramener en position escamotée. En fin de dévissage, la partie de montage de l'élément d'escamotage est bloquée en sandwich entre l'écrou et le retour du cadre, pour retenir la griffe en position escamotée.

Au contraire, lorsque l'installateur visse la vis, la montée de l'écrou libère l'élément d'escamotage, qui est alors libre de se déplacer pour suivre le mouvement de la griffe lorsqu'elle bascule en position déployée. L'élément d'escamotage ne subit donc pas nécessairement de déformation.

Ainsi, l'élément d'escamotage ne génère aucune force résistante lors de l'installation du support d'appareillage sur la boîte murale. Il reste en outre en état non déformé lorsque le support d'appareillage est installé sur la boîte murale, si bien qu'il n'est pas sujet au vieillissement.

D'autres caractéristiques avantageuses et non limitatives du support d'appareillage conforme à l'invention sont définies dans les revendications 2 à 11.

L'invention concerne également un appareillage électrique tel que défini dans la revendication 12.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- les figures 1 et 2 sont des vues schématiques en perspective du support d'appareillage selon l'invention, sur lesquelles les griffes sont respectivement représentées en position escamotée et déployée ;
- les figures 3 et 4 sont des vues en coupe selon les plans A-A de la figure 1 et B-B de la figure 2 ;
- les figures 5 et 6 sont des vues schématiques en perspective de deux variantes de réalisation des moyens de retenue des vis en appui contre le cadre du support d'appareillage selon l'invention.

En préliminaire on notera que les éléments identiques ou similaires des différentes variantes de réalisation de l'invention représentées sur les différentes figures seront, dans la mesure du possible, référencés par les mêmes signes de référence et ne seront pas décrits à chaque fois.

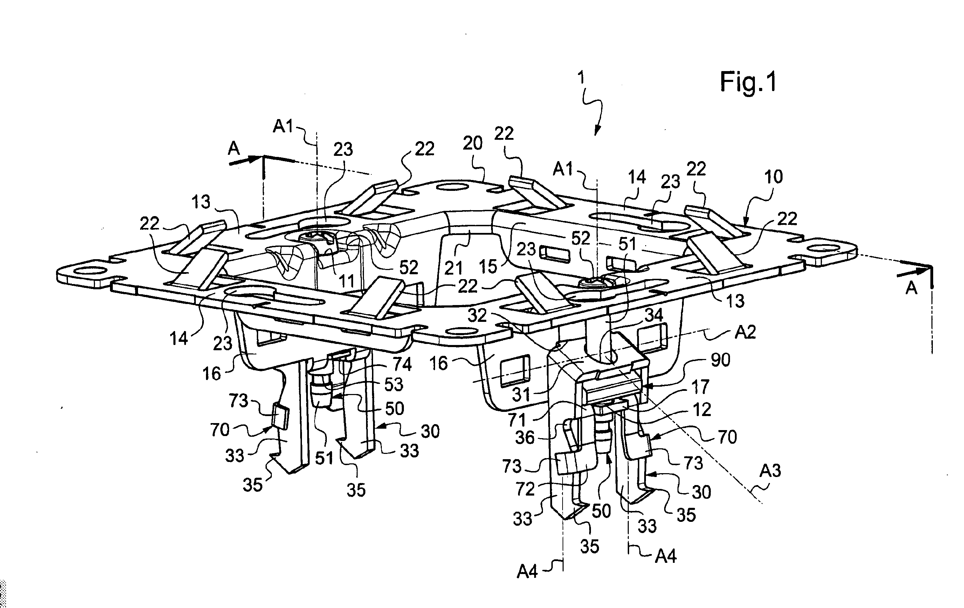

Sur la figure 1, on a représenté schématiquement un support d'appareillage 1 prêt à être installé sur une boîte murale (non représentée) encastrée dans une cavité pratiquée dans une paroi.

Dans la suite de la description, les termes « avant » et « arrière » désigneront alors respectivement le lieu tourné vers l'installateur du support d'appareillage 1 sur la boîte murale et le lieu tourné vers le fond de la cavité pratiquée dans la paroi.

Les termes « intérieur » et « extérieur » désigneront quant à eux respectivement le lieu tourné vers le centre du support d'appareillage 1 et le lieu tourné à l'opposé.

Le support d'appareillage 1 sert au montage à l'intérieur de la boîte murale d'un ou plusieurs mécanismes d'appareillage, par exemple un mécanisme d'interrupteur, de prise de courant, de prise de téléphone ou encore de disjoncteur.

Le support d'appareillage 1 est prévu pour être esthétiquement recouvert par une plaque de façade enjoliveur (non représentée sur les figures) en forme de cadre, de telle manière que le bord intérieur de cette plaque de façade enjoliveur borde le mécanisme d'appareillage et que le bord extérieur de cette plaque de façade enjoliveur s'appuie sur la paroi murale, autour de la boîte murale.

Tel que représenté sur la figure 1, le support d'appareillage 1 comporte un cadre 10 de forme carrée, venu de formation à partir d'un feuillard métallique découpé et plié à la forme souhaitée.

Ce cadre 10 comporte ainsi quatre branches 13, 14 planes. Il est défini entre un bord périphérique extérieur 20 et un bord périphérique intérieur 21 qui délimite une ouverture centrale 15 également de forme carrée.

Ce cadre 10 comporte en outre deux flancs 16 plats qui s'étendent à partir de deux côtés opposés du bord périphérique intérieur 21 du cadre 10, vers l'arrière. Ces deux flancs 16 sont issus de la matière découpée pour former l'ouverture centrale 15, et sont repliés à angle droit par rapport aux branches 13 qu'ils bordent.

Chacune des quatre branches 13, 14 du cadre 10 comporte également des moyens de clippage 22 permettant d'encliqueter la plaque de façade enjoliveur sur le support d'appareillage, qui se présentent ici sous la forme de languettes inclinées par rapport aux branches 13, 14 du cadre 10.

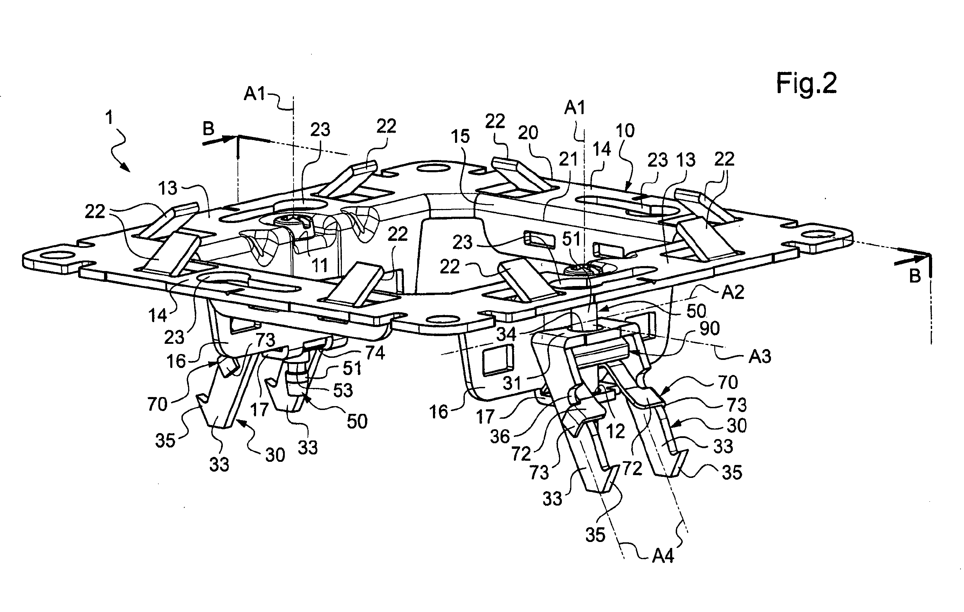

Comme on peut le voir sur les figures 1 et 2, le support d'appareillage 1 comporte enfin des premiers et des seconds moyens d'assujettissement propres à permettre sa fixation à la boîte murale.

Les premiers moyens d'assujettissement comprennent classiquement, dans chacune des quatre branches 13, 14 du cadre 10, un perçage 23 en forme de trou de serrure qui permet le passage du corps fileté d'une vis de fixation destiné à être vissé dans un puits de vissage correspondant de la boîte murale.

Les seconds moyens d'assujettissement, qui font plus précisément ici l'objet de la présente invention, comprennent quant à eux deux ensembles d'éléments qui interviennent en position diamétralement opposée sur le cadre 10, de part et d'autre de ses deux flancs 16. Chaque ensemble comporte une griffe 30 qui, sous le contrôle d'une vis 50 et d'un écrou 90, est apte à venir s'ancrer dans la paroi latérale de la boîte murale.

Chaque vis 50 présente ainsi un corps fileté 51 d'axe A1 qui est engagé au travers d'une ouverture 11 prévue à mi-longueur de l'une des branches 13 du cadre 10, et une tête 52 qui s'appuie sur le bord avant de cette ouverture 11. Ici, chaque vis 50 est montée sur le cadre 10 de manière à présenter un unique degré de liberté par rapport à celui-ci, en rotation autour de l'axe A1.

Chaque écrou 90 est vissé sur le corps fileté 51 de la vis 50 et est monté de telle manière qu'il est libre de se translater vers l'avant et vers l'arrière du cadre 10, mais qu'il est bloqué en rotation autour de l'axe A1.

Chaque griffe 30 comporte une paroi principale 31 à partir de laquelle s'étend au moins un jambage 33 agencé pour s'ancrer dans la paroi latérale de la boîte murale. La paroi principale 31 présente une ouverture 34 engagée sur la vis 50, entre l'écrou 90 et la face arrière de la branche 13 correspondante du cadre 10. Elle est articulée sur le flanc 16 correspondant du cadre 10 de telle sorte que la griffe 30 est libre de basculer depuis une position escamotée jusqu'à une position déployée, lors du vissage de la vis 50 et de la remontée de l'écrou 90 le long de cette vis 50.

Le support d'appareillage 1 comporte par ailleurs des moyens de rappel 70 agencés pour ramener chaque griffe 30 en position escamotée lors du dévissage de la vis 50.

Le cadre 10 comporte à cet effet, à l'extrémité arrière de chaque flanc 16, un retour 17 qui est replié à angle droit vers l'extérieur du support d'appareillage 1, de telle sorte qu'il se positionne en regard de la branche 13 correspondante du cadre 10. Chaque retour 17 présente une ouverture 12, coaxiale avec l'ouverture 11 prévue dans la branche 13 correspondante du cadre 10, au travers de laquelle est engagée l'extrémité du corps fileté 51 de la vis 50.

Alors, selon une caractéristique particulièrement avantageuse de l'invention, les moyens de rappel de chaque griffe 30 comportent un élément d'escamotage 70 présentant, d'une part, une partie de montage 71 qui est engagée sur la vis 50, entre l'écrou 90 et le retour 17, et, d'autre part, une partie d'actionnement 72 qui coopère avec la griffe 30 pour la ramener en position escamotée lors du dévissage de ladite vis 50.

L'élément d'escamotage 70 est plus précisément prévu pour basculer par rapport au cadre 10, de façon à suivre librement le mouvement de la griffe 30 lorsque celle-ci bascule vers sa position déployée à la faveur du vissage de la vis 50, et à ramener la griffe 30 en position escamotée lorsque l'écrou 90 vient appuyer contre sa partie de montage 71 à la faveur du dévissage de la vis 50.

L'élément d'escamotage 70, tel qu'il est représenté sur les figures, sera plus précisément décrit dans la suite de cet exposé.

Telle que représentée sur les figures 1 et 2, chaque vis 50 présente une forme classique, avec en particulier une empreinte mixte sur la tête 52. Son corps fileté 51 comporte toutefois ici, du côté de son extrémité libre, une réduction de section qui forme une gorge périphérique 53.

Les ouvertures 11, 12 coaxiales prévues sur le cadre 10 et qui sont traversées par le corps fileté 51 de la vis 50 présentent des diamètres égaux, au jeu près, au diamètre extérieur du corps fileté 51 de la vis 50.

Ces deux ouvertures 11, 12 permettent ainsi de bloquer toutes les mobilités de la vis 50 par rapport au cadre 10, à l'exception des mobilités de rotation autour de l'axe A1 et de translation suivant l'axe A1.

La vis 50 est toutefois bloquée en translation vers l'arrière, par sa tête 52 qui s'appuie contre le bord de l'ouverture 11.

Pour permettre à l'écrou 90 de descendre vers l'arrière du cadre 10 et d'appuyer sur l'élément d'escamotage 70 lorsque l'installateur dévisse la vis 50 (et pour éviter que ce ne soit la vis 50 qui remonte vers l'avant du cadre 10), il est par ailleurs prévu un moyen pour retenir la tête 52 de la vis 50 en appui contre le bord de l'ouverture 11.

Ce moyen est en l'espèce formé par le mécanisme d'appareillage (non représenté) lui-même qui, une fois monté sur le support d'appareillage, vient en appui contre la face avant de la tête 52 de la vis 50.

Plus précisément, le mécanisme d'appareillage comporte un socle qui est engagé dans l'ouverture centrale 15 du cadre 10 et qui est bordé par un trottoir qui s'appuie contre les faces avant des branches 13, 14 du cadre.

Ainsi, une fois le mécanisme d'appareillage monté sur le support d'appareillage 1, la tête 52 de la vis 50 est bloquée entre le cadre 10 du support d'appareillage 1 et le trottoir du socle du mécanisme d'appareillage.

Pour pouvoir manoeuvrer la vis 50 lorsque le mécanisme d'appareillage est monté sur le support d'appareillage 1, le trottoir du socle du mécanisme d'appareillage présente une fenêtre traversante qui permet de laisser accès à l'empreinte mixte de la vis 50.

Comme le montrent plus particulièrement les figures 1 et 2, chaque griffe 30 présente ici une forme de U, avec deux jambages 33 qui s'étendent à partir des deux extrémités de sa paroi principale 31.

Sa paroi principale 31 est plane et rectangulaire. Elle s'étend en longueur suivant un axe longitudinal A2 et en largeur suivant un axe transversal A3, perpendiculaire à l'axe longitudinal A2.

Le bord intérieur de cette paroi principale 31, qui est tourné vers le flanc 16 du cadre 10, présente deux découpes qui délimitent entre elles une languette 32 allongée suivant un axe parallèle à l'axe longitudinal A2.

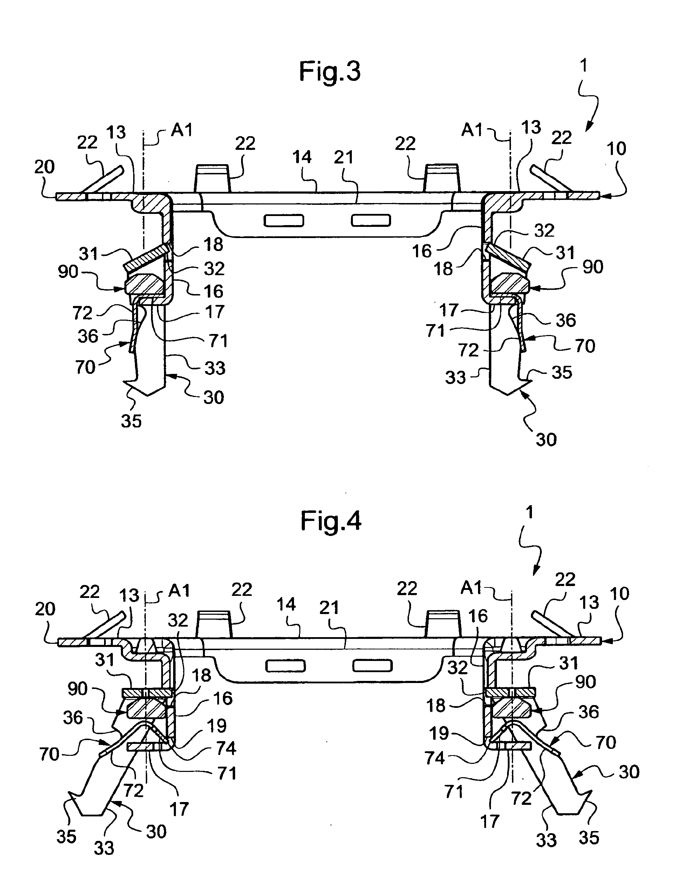

Comme le montre la figure 3, le flanc 16 du cadre 10 comporte en correspondance une fenêtre traversante 18 rectangulaire, dans laquelle est engagée la languette 32 de la griffe 30. Cette fenêtre traversante 18 présente ici une longueur égale, au jeu près, à la longueur de la languette 32 et une largeur légèrement supérieure à l'épaisseur de la languette 32.

Grâce à cette fenêtre traversante 18, la griffe 30 est guidée en basculement par sa languette 32, entre sa position escamotée et sa position déployée. La griffe 30 est en outre retenue en position axiale par cette fenêtre traversante 18, suivant l'axe A1.

Telle que représentée sur la figure 1, l'ouverture 34 prévue dans la paroi principale 31 de la griffe 30 est oblongue et est allongée suivant l'axe transversal A3. Grâce à sa forme, cette ouverture 34 permet à la griffe 30 de basculer entre sa position escamotée et sa position déployée sans interférer avec le corps fileté 51 de la vis 50.

Les deux jambages 33 sont quant à eux plats et s'étendent dans des plans orthogonaux au plan de la paroi principale 31, suivant des axes A4 inclinés à environ 60 degrés par rapport à l'axe transversal A3.

Ils présentent chacun, à proximité de leur extrémité libre, une dent pointue 35 qui est orientée vers l'extérieur du support d'appareillage 1 et qui est adaptée à s'ancrer dans la paroi latérale d'une boîte murale.

En position escamotée (figures 1 et 3), les axes A4 des jambages 33 de la griffe 30 s'étendent parallèlement au flanc 16 du cadre 10, de telle sorte que les dents pointues 35 ne forment pas obstacle à l'engagement du support d'appareillage 1 sur la boîte murale. Dans cette position, la paroi principale 31 de la griffe 30 est inclinée d'environ 60 degrés par rapport au flanc 16 du cadre 10.

En position déployée (figures 2 et 4), la paroi principale 31 s'étend parallèlement aux branches 13, 14 du cadre 10. Dans cette position, les axes A4 des jambages 33 sont inclinés vers l'extérieur d'environ 30 degrés par rapport au flanc 16 du cadre 10, si bien que les dents pointues 35 sont adaptées à s'accrocher à la paroi latérale de la boîte murale.

Cette griffe 30 est issue d'une opération de découpe et de pliage d'un feuillard métallique brut. Elle est donc de fabrication peu onéreuse.

Tel que représenté sur les figures 1 à 4, l'écrou 90 présente une forme sensiblement parallélépipédique.

Il est traversé dans son épaisseur par un alésage taraudé en prise avec le filetage de la vis 50.

Cet écrou 90 présente une longueur égale, au jeu près, à la distance séparant les faces internes des deux jambages 33 de la griffe 30. Il est en outre vissé sur la vis 50 de telle sorte que ses faces d'extrémité s'appliquent contre les jambages 33 de la griffe 30. Ainsi, l'écrou 90 est bloqué en rotation autour de l'axe A1 par la griffe 30, mais il reste libre de coulisser le long de l'axe A1.

Les deux arêtes longitudinales avant de cet écrou 90 sont ici chanfreinées.

Cet écrou 90 est ici formé d'une seule pièce en matière métallique.

Tel qu'il est représenté sur les figures 1 à 4, l'élément d'escamotage 70 est avantageusement élastiquement déformable en ce sens qu'il présente une raideur très inférieure à celle des autres éléments du support d'appareillage 1. Grâce à cette élasticité, les mouvements relatifs de la griffe 30 et de l'élément d'escamotage 70 n'ont pas à être parfaitement coordonnés.

Ainsi pourra-t-on par exemple prévoir que l'élément d'escamotage 70 commence à se déformer alors même que la griffe 30 reste immobile, de manière qu'il exerce sur la griffe 30 un effort qui augmente progressivement afin de retirer les dents pointues 35 de la griffe 30 hors de la paroi latérale de la boîte murale.

Bien entendu, en variante, on pourrait également prévoir que l'élément d'escamotage ne soit pas élastiquement déformable en ce sens qu'il présente une raideur de l'ordre de celle des autres éléments du support d'appareillage.

Toutefois, ici, cet élément d'escamotage est ici formé par une simple lame-ressort 70, qui vient de formation à partir d'un fin feuillard métallique découpé et plié à la forme souhaitée.

Cette lame-ressort 70 est ici découpée de manière à présenter une forme de U.

Sa partie de montage 71, qui est engagée sur la vis 50 entre l'écrou 90 et le retour 17 du flanc 16 du cadre 10, est alors formée par la base de ce U, tandis que sa partie d'actionnement 72, qui coopère avec la griffe 30 pour la ramener en position escamotée, est formée par les deux branches de ce U.

La partie de montage 71 de l'élément d'escamotage 70 est ici plane et sensiblement rectangulaire. Elle s'étend en longueur parallèlement à l'axe longitudinal A2 de telle manière que lorsque la griffe 30 est en position escamotée (figure 3), elle repose sur la face avant du retour 17 du flanc 16 du cadre 10. Elle présente par ailleurs une largeur légèrement supérieure à la largeur du retour 17, de manière à déborder de celui-ci vers l'extérieur.

La partie de montage 71 comporte ici des moyens de montage à rotation sur le flanc 16 du cadre 10, autour d'un axe parallèle à l'axe longitudinal A2. Le bord intérieur de cette partie de montage 71 présente à cet effet une languette 74 qui est engagée dans une fenêtre 19 prévue en correspondance sur le cadre 10, à la jonction entre le retour 17 et le flanc 16 du cadre 10.

Ainsi, la lame-ressort 70 est guidée en rotation par cette fenêtre 19 pour accompagner le mouvement de basculement de la griffe 30. Elle est en outre retenue en translation par cette fenêtre suivant l'axe A1.

La partie de montage 71 présente par ailleurs, au centre de son bord extérieur, une encoche en demi-disque (non visible sur les figures) au travers de laquelle est engagée la vis 50. De cette manière, la partie de montage 71 est retenue entre, d'un côté, le flanc 16 du cadre 10, et, de l'autre, la vis 50.

Les branches de la partie d'actionnement 72 de la lame-ressort 70 s'étendent quant à elles à partir des deux extrémités du bord extérieur de la partie de montage 71, de chaque côté de ladite encoche, de telle manière qu'elles passent de part et d'autre du corps fileté 51 de la vis 50 et qu'elles font saillie vers l'extérieur.

Ces deux branches 72 sont sensiblement planes et s'étendent en parallèle, dans un plan qui est incliné par rapport au plan de la partie de montage 71. Comme le montre la figure 3, les branches 72 sont ici coudées à angle droit vers l'arrière par rapport à la partie de montage 71. Les coudes prévus entre les branches 72 et la partie de montage 71 forment ainsi une charnière élastique, qui permet aux branches de s'incliner par rapport à la partie de montage 71.

Pour permettre aux branches 72 de ramener la griffe 30 en position escamotée lorsque l'installateur dévisse la vis 50, ces branches 72 présentent des moyens de crochetage des deux jambages 33 de la griffe 30.

Plus précisément, les extrémités libres des deux branches 72 portent chacune une patte latérale 73 agencée pour s'appuyer sur le bord extérieur du jambage 33 correspondant de la griffe 30.

Les extrémités de ces pattes latérales 73 sont par ailleurs repliées à angle droit vers l'intérieur du support d'appareillage 1, sur les faces opposées des deux jambages 33 de la griffe 30, pour assurer un bon maintien relatif de la lame-ressort 70 par rapport à la griffe 30.

Comme le montre mieux la figure 1, pour optimiser l'effort appliqué par la lame-ressort 70 sur la griffe 30 lorsque cette dernière est en position déployée, les jambages 33 de la griffe 30 présentent, en creux dans leur bord extérieur, des renfoncements 36 dans lesquels se logent les pattes latérales 73 de la lame-ressort 70.

Ces renfoncements 36 présentent chacun un bord droit incliné par rapport à l'axe A4 de telle manière que les pattes latérales 73 s'appliquent uniformément sur ces bords droits pour répartir au mieux les efforts qu'elles appliquent sur les jambages 33.

La fixation du support d'appareillage 1 sur la boîte murale est opérée de la manière suivante.

Initialement, le support d'appareillage 1 est livré avec ses griffes 30 en position escamotée et avec un mécanisme d'appareillage déjà encliqueté sur le cadre 10. Les vis 50 sont ainsi bloquées entre le cadre 10 du support d'appareillage et le trottoir du socle du mécanisme d'appareillage (non représenté).

Grâce à la position des griffes 30, l'installateur peut alors directement rapporter cet ensemble (appelé appareillage électrique) sur la boîte murale, en veillant à ce que les griffes 30 s'engagent bien à l'intérieur de la boîte murale.

Il reste alors à l'installateur à visser les vis 50, de telle sorte que les écrous 90 remontent le long de ces vis 50 et provoquent le basculement des griffes 30 en position déployée.

Dans cette position, les dents pointues 35 des griffes 30 s'ancrent dans la paroi latérale de la boîte murale, et retiennent ainsi solidement le support d'appareillage 1 sur la boîte murale. La plaque de façade enjoliveur peut alors être encliquetée sur le cadre 10 pour recouvrir esthétiquement le support d'appareillage 1.

On notera que lors du vissage de la vis 50, l'écrou 90 s'écarte du retour 17 et libère donc la lame-ressort 70, qui est ainsi libre de basculer avec la griffe 30. Par conséquent, lorsque le support d'appareillage 1 est fixé à la boîte murale, les lames-ressort 70 ne sont pas déformées et elles n'exercent aucun effort sur les griffes 30.

Le démontage de l'appareillage électrique hors de la boîte murale est ensuite opéré de la manière suivante.

L'installateur commence par retirer la plaque de façade enjoliveur. Puis, il dévisse les vis 50 de telle manière que les écrous 90 descendent le long de ces vis 50 et qu'ils repoussent les lames-ressort 70 contre les retours 17 des flancs 16 du cadre 10.

Lors de cette opération, les lames-ressort 70 basculent de telle sorte que leurs branches 72 exercent un effort de rappel sur les jambages 33 des griffes 30. De cette manière, les lames-ressort 70 permettent d'extraire les dents pointues 35 des griffes 30 hors de la paroi latérale de la boîte murale afin de ramener les griffes 30 en position escamotée.

La présente invention n'est nullement limitée aux modes de réalisation décrits et représentés, mais l'homme du métier saura y apporter toute variante conforme à son esprit.

En particulier, on pourra prévoir d'utiliser non pas des écrous spécifiquement développés pour ce support d'appareillage, mais au contraire des écrous standards à six pans peu onéreux, pour autant que la taille de ces écrous corresponde à la distance entre les deux jambages de la griffe.

On pourra également utiliser une griffe de fixation de forme différente, comportant par exemple un seul jambage.

Encore en variante, on pourra prévoir que l'ouverture prévue sur le retour du flanc du cadre s'ouvre latéralement vers l'extérieur par une fente permettant de faciliter l'engagement de l'extrémité libre du corps fileté de la vis dans cette ouverture.

Selon une autre variante, on pourra prévoir que le support d'appareillage soit dépourvu de moyens de retenu axial de la vis vers l'avant, auquel cas, lors du dévissage de la vis, l'installateur devra exercer un effort de pression sur la vis vers l'arrière pour éviter que cette dernière ne remonte par rapport au cadre. Cet effort permettra ainsi au boulon de descendre le long de la vis pour faire basculer la lame-ressort vers l'arrière.

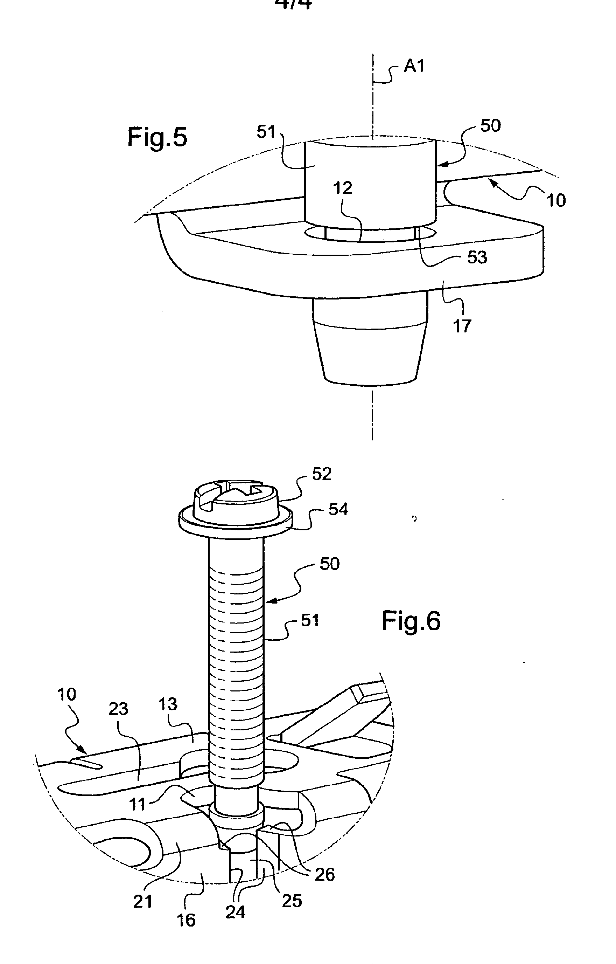

Sur la figure 5, on a représenté un autre mode de réalisation des moyens de retenue de la tête 52 de la vis 50 en appui contre la face avant de la branche 13 du cadre 10.

Dans ce mode, l'ouverture 12 prévue dans le retour 17 du flanc 16 du cadre 10 présente une forme particulière, et la gorge périphérique 53 prévue à l'extrémité du corps fileté 51 de la vis 50 est engagée dans cette ouverture 12, afin de bloquer axialement la vis 50 suivant l'axe A1.

Le retour 17 est à cet effet situé à une distance des branches 13, 14 du cadre 10 qui est telle que, lorsque la gorge périphérique 53 de la vis 50 est engagée dans l'ouverture 12, la tête 52 de la vis 50 est en appui contre la face avant du cadre 10.

L'ouverture 12 présente quant à elle une forme de trou de serrure, avec une partie arrondie par laquelle le corps fileté 51 de la vis 50 peut être engagé dans l'ouverture 12, et une partie oblongue de largeur sensiblement égale au diamètre de la gorge périphérique 53.

De cette manière, les flancs avant et arrière de la gorge périphérique 53 peuvent s'appuyer contre les faces avant et arrière du retour 17 du flanc 16 du cadre 10, au bord de la partie oblongue de l'ouverture 12, pour bloquer axialement la vis 50.

Sur la figure 6, on a représenté un autre mode de réalisation des moyens de retenue de la tête 52 de la vis 50 en appui contre la face avant de la branche 13 du cadre 10.

Dans ce mode, la vis 50 comporte une collerette 54 qui borde sa tête 52 et qui est située à la jonction entre sa tête 52 et son corps fileté 51.

Pour coopérer avec cette collerette 54, le cadre 10 présente une forme particulière au niveau de son ouverture 11, qui lui permet de prendre la collerette 54 en sandwich afin de la bloquer selon l'axe A1.

Vue par l'avant, l'ouverture 11 présente ainsi une forme en U qui s'ouvre sur le bord périphérique intérieur 21 du cadre 10 et qui présente une largeur égale, au jeu près, au diamètre de la tête 54 de la vis 50.

Par conséquent, la tête 54 de la vis 50 peut être engagée latéralement dans cette ouverture 11 de telle manière que la face avant de sa collerette 54 s'applique sur la face arrière de la branche 13 du cadre.

Pour engager latéralement la vis 50 dans cette ouverture 11, le flanc 16 du cadre 10 présente alors une fente 25 qui communique vers l'avant avec l'ouverture 11 et qui se prolonge vers l'arrière jusqu'à l'extrémité du flanc 16. Cette fente 25 présente une largeur égale, au jeu près, au diamètre du corps fileté 51 de la vis 50.

Cette fente 25 est bordée de deux rebords 24 qui sont repliés à angle droit vers l'extérieur du support d'appareillage 1 et qui viennent de formation à partir de la matière découpée pour former la fente 25.

Comme le montre la figure 6, les extrémités avant 26 de ces deux rebords 24 sont ici situées sous l'ouverture 11, pour former une portée pour la face arrière de la tête 52 de la vis 50.

Ainsi, la collerette 54 de la vis 50 est retenue vers l'avant par la face arrière de la branche 13, et vers l'arrière par les extrémités avant 26 des deux rebords 24.

## Revendications

1. Support d'appareillage (1) comprenant :
- un cadre (10) comportant quatre branches (13, 14) qui délimitent entre elles une ouverture centrale (15),
- une vis (50) engagée au travers d'une première ouverture (11) prévue dans l'une desdites branches (13),
- un écrou (90) vissé sur ladite vis (50), à l'arrière de ladite branche (13),
- une griffe (30) comprenant une paroi principale (31) qui est engagée sur ladite vis (50), entre ladite branche (13) et ledit écrou (90), et qui comporte un moyen de charnière (32) par rapport au cadre (10) pour pivoter depuis une position escamotée jusqu'à une position déployée lors du vissage de ladite vis (50), et
- des moyens de rappel (70) de ladite griffe (30) en position escamotée, **caractérisé en ce que** le cadre (10) comporte, à l'arrière dudit écrou (90), au moins un retour (17) qui présente une seconde ouverture (12) au travers de laquelle est engagée ladite vis (50),
et **en ce que** lesdits moyens de rappel comportent une partie de montage (71) qui est montée mobile par rapport audit cadre (10), entre ledit écrou (90) et ledit retour (17), et une partie d'actionnement (72) qui coopère avec ladite griffe (30) pour la ramener en position escamotée lors du dévissage de ladite vis (50).

2. Support d'appareillage selon la revendication précédente, dans lequel ledit élément d'escamotage est formé par une lame-ressort (70).

3. Support d'appareillage selon l'une des revendications précédentes, dans lequel il est prévu des moyens de retenue de la vis (50) vers l'avant et vers l'arrière du cadre (10).

4. Support d'appareillage selon l'une des revendications précédentes, dans lequel la partie d'actionnement (72) de l'élément d'escamotage (70) comporte un crochet (73) qui coopère avec la griffe (30) en s'y accrochant.

5. Support d'appareillage selon l'une des revendications précédentes, dans lequel ladite griffe (30) comporte deux jambages (33) parallèles qui s'étendent à partir de la paroi principale (31), et dans lequel ledit élément d'escamotage (70) présente une forme de U, avec une base qui forme ladite partie de montage (71) et deux branches qui forment ensemble ladite partie d'actionnement (72) et qui coopèrent chacune avec l'un des jambages (33) de la griffe (30).

6. Support d'appareillage selon l'une des revendications précédentes, dans lequel ledit élément d'escamotage (70) comporte un moyen de charnière (74) par rapport au cadre (10), pour pivoter avec la griffe (30).

7. Support d'appareillage selon la revendication précédente, dans lequel ledit moyen de charnière comporte une languette (74) engagée dans une fenêtre (19) prévue dans le cadre (10).

8. Support d'appareillage selon l'une des deux revendications précédentes, dans lequel la partie de montage (71) de l'élément d'escamotage (70) est plane et présente une largeur supérieure ou égale à la longueur dudit retour (17), et dans lequel l'élément d'escamotage (70) est coudé entre ses parties de montage et d'actionnement (71, 72).

9. Support d'appareillage selon l'une des revendications précédentes, dans lequel le cadre (10) comporte au moins un flanc qui descend à partir de l'une des branches (13, 14) du cadre (10), orthogonalement à celle-ci, vers l'arrière du cadre (10), et qui porte ledit retour (17).

10. Support d'appareillage selon la revendication précédente, dans lequel le cadre (10) comporte deux flancs (16) identiques qui descendent à partir de deux bords opposés de ladite ouverture centrale (15), et dans lequel il est prévu deux vis (50) identiques, deux écrous (90) identiques, deux griffes (30) identiques, et deux moyens de rappel (70) identiques qui interviennent en position diamétralement opposée, de part et d'autre des deux flancs (16) du cadre (10).

11. Support d'appareillage selon l'une des revendications précédentes, dans lequel le cadre (10), la griffe (30), la vis (50), l'élément d'escamotage (70) et l'écrou (90) sont chacun réalisés d'une seule pièce.

12. Appareillage électrique comportant un support d'appareillage (1) qui supporte au moins un mécanisme d'appareillage, **caractérisé en ce que** le support d'appareillage (1) est conforme à l'une des revendications précédentes.

## Patentansprüche

1. Gerätehalterung (1) mit:
- einem vierseitigen (13, 14) Rahmen (10), wobei die vier Seiten eine zentrale Öffnung (15) abgrenzen,
- einer Schraube (50), die durch eine erste, in einer dieser Seiten (13) vorgesehene Öffnung (11) gesteckt ist,
- einer auf diese Schraube (50) geschraubten Mutter (90) auf der Rückseite dieser Seite (13),
- einer Pratze (30) mit einer Hauptwand (31), die zwischen dieser Seite (13) und der Mutter (90) auf diese Schraube (50) gesteckt ist, die in Bezug zum Rahmen (10) ein Scharnier (32) besitzt, um sich beim Eindrehen der Schraube (50) von einer eingezogenen Position bis in eine ausgezogene Position zu drehen, und
- Rückstellmittel (70) für diese Pratze (30) in die eingezogene Position,
**dadurch gekennzeichnet, dass** der Rahmen (10) auf der Rückseite der Mutter (90) mindestens eine Rückführung (17) umfasst, die eine zweite Öffnung (12) aufweist, durch die die Schraube (50) gesteckt wird,
und dadurch, dass diese Rückstellmittel zwischen der Mutter (90) und der Rückführung (17) ein in Bezug zum Rahmen (10) beweglich montiertes Montageteil (71) und ein Betätigungsteil (72) umfassen, das mit der Pratze (30) zusammenwirkt, um sie beim Herausdrehen der Schraube (50) in die eingezogene Position zurückzubringen.

2. Gerätehalterung nach vorausgehendem Anspruch, bei der das Einzugselement aus einer Blattfeder (70) gebildet wird.

3. Gerätehalterung nach einem der vorausgehenden Ansprüche, bei der für die Schraube (50) an der Vorder- und Rückseite des Rahmens (10) Befestigungsmittel vorgesehen sind.

4. Gerätehalterung nach einem der vorausgehenden Ansprüche, bei der das Betätigungsteil (72) des Einzugselements (70) einen Haken (73) umfasst, der durch Einhängen in der Pratze (30) mit dieser zusammenwirkt.

5. Gerätehalterung nach einem der vorausgehenden Ansprüche, bei der die Pratze (30) zwei parallele Füße (33) umfasst, die sich von der Hauptwand (31) ausgehend erstrecken, und bei der das Einzugselement (70) eine U-Form aufweist, mit einer Basis, die das Montageteil (71) bildet und zwei Armen, die zusammen das Betätigungsteil (72) bilden und die beide jeweils mit einem der Füße (33) der Pratze (30) zusammenwirken.

6. Gerätehalterung nach einem der vorausgehenden Ansprüche, bei der das Einzugselement (70) in Bezug zum Rahmen (10) ein Scharnier (74) umfasst, um sich mit der Pratze (30) zu drehen.

7. Gerätehalterung nach vorausgehendem Anspruch, bei der das Scharnier eine Lasche (74) umfasst, die in einem im Rahmen (10) vorgesehenen Fenster (19) steckt.

8. Gerätehalterung nach einem der zwei vorausgehenden Ansprüche, bei der das Montageteil (71) des Einzugselements (70) flach und mindestens so breit oder breiter ist als die Länge der Rückführung (17), und bei der das Einzugselement (70) zwischen seinen Montage- und Betätigungsteilen (71, 72) abgewinkelt ist.

9. Gerätehalterung nach einem der vorausgehenden Ansprüche, bei der der Rahmen (10) mindestens eine Flanke umfasst, die ausgehend von einer der Seiten (13, 14) des Rahmens (10) orthogonal zu dieser auf der Rückseite des Rahmens (10) nach unten verläuft und die Rückführung (17) trägt.

10. Gerätehalterung nach vorausgehendem Anspruch, bei der der Rahmen (10) zwei identische Flanken (16) aufweist, die ausgehend von zwei gegenüberliegenden Rändern der zentralen Öffnung (15) nach unten verlaufen, und bei der zwei identische Schrauben (50), zwei identische Muttern (90), zwei identische Pratzen (30) und zwei identische Rückstellmittel (70) vorgesehen sind, die in ganz entgegengesetzter Position auf beiden Seiten der zwei Flanken (16) des Rahmens (10) zur Wirkung kommen.

11. Gerätehalterung nach einem der vorausgehenden Ansprüche, bei der der Rahmen (10), die Pratze (30), die Schraube (50), das Einzugselement (70) und die Mutter (90) jeweils aus einem einzigen Stück hergestellt sind.

12. Elektrisches Gerät mit einer Gerätehalterung (1), die mindestens einen Gerätemechanismus aufnimmt, **dadurch gekennzeichnet, dass** die Gerätehalterung (1) einem der vorausgehenden Ansprüche entspricht.

## Claims

1. An equipment support (1) comprising:
· a frame (10) comprising four branches (13, 14) that define between them a central opening (15);
· a screw (50) that is engaged through a first opening (11) that is provided in one of said branches (13);
· a nut (90) that is screw-fastened on said screw (50), behind said branch (13);
· a claw (30) that includes a main wall (31) that is engaged on said screw (50), between said branch (13) and said nut (90), and that includes hinge means (32) for hinging relative to the frame (10) so as to pivot from a retracted position to a deployed position while said screw (50) is being screwed; and
· return means (70) for returning said claw (30) into its retracted position;
the equipment support being **characterized in that** behind said nut (90), the frame (10) includes at least one rim (17) that shows a second opening (12) through which said screw (50) is engaged; and
**in that** said return means comprise a retractor element including a mounting portion (71) that is mounted to move relative to said frame (10), between said nut (90) and said rim (17), and an actuator portion (72) that co-operates with said claw (30) so as to return it into its retracted position while said screw (50) is being unscrewed.

2. An equipment support according to the preceding claim, wherein said retractor element is formed by a spring blade (70).

3. An equipment support according to any preceding claim, wherein holding means are provided for holding the screw (50) towards the front and towards the rear of the frame (10).

4. An equipment support according to any preceding claim, wherein the actuator portion (72) of the retractor element (70) includes a hook (73) that co-operates with the claw (30) by hooking onto it.

5. An equipment support according to any preceding claim, wherein said claw (30) comprises two legs (33) that are parallel and that extend from the main wall (31), and wherein said retractor element (70) presents a U-shape, with a web that forms said mounting portion (71), and two branches that form said actuator portion (72), and that co-operate with respective ones of the legs (33) of the claw (30).

6. An equipment support according to any preceding claim, wherein said retractor element (70) includes hinge means (74) for hinging relative to the frame (10) so as to pivot with the claw (30).

7. An equipment support according to the preceding claim, wherein said hinge means comprise a tab (74) that is engaged in a slot (19) that is provided in the frame (10).

8. An equipment support according to either one of the two preceding claims, wherein the mounting portion (71) of the retractor element (70) is plane and presents a
width that is not less than the length of said rim (17), and wherein the retractor element (70) is bent between its mounting and actuator portions (71, 72).

9. An equipment support according to any preceding claim, wherein the frame (10) includes at least one flank that descends from one of the branches (13, 14) of the frame (10), orthogonally to said branch, towards the rear of the frame (10), and that carries said rim (17).

10. An equipment support according to the preceding claim, wherein the frame (10) includes two flanks (16) that are identical and that descend from two opposite edges of said central opening (15), and wherein there are provided two identical screws (50), two identical nuts (90), two identical clawes (30), and two identical return means (70) that act in diametrally-opposite positions on either side of the two flanks (16) of the frame (10).

11. An equipment support according to any preceding claim, wherein the frame (10), the claw (30), the screw (50), the retractor element (70), and the nut (90) are each made as a single piece.

12. Electrical equipment including an equipment support (1) that supports at least one equipment mechanism, the electrical equipment being **characterized in that** the equipment support (1) is in accordance with any one of the preceding claims.
